# EUROPEAN PATENT SPECIFICATION

(11) **EP 3 508 392 B1**
(45) Date of publication and mention of the grant of the patent: **15.11.2023**
(21) Application number: 18215988.9
(22) Date of filing: 31.12.2018
(51) Int. Cl.: B60W 30/18, B60W 50/14

(54) **CONTROL SYSTEM FOR A VEHICLE AND METHOD OF OPERATING A VEHICLE**
FAHRZEUGSTEUERSYSTEM UND -VERFAHREN
SYSTÈME ET PROCÉDÉ DE CONTRÔLE DE VÉHICULE

(30) Priority: 03.01.2018 GB 201800065
(43) Date of publication of application: 10.07.2019
(73) Proprietor: Alexander Dennis Limited, Camelon, Falkirk FK1 4JB (GB)
(72) Inventor: HYDEN, Daniel, Falkirk, FK1 4JB (GB)
(74) Representative: Marks & Clerk LLP

(56) References cited:
- EP-A1- 2 781 722
- WO-A1-2015/120872
- DE-A1-102016 200 717
- US-A1- 2015 232 099

## Description

### FIELD

The invention relates to control systems and methods for a passenger vehicle for providing an indication based on a coasting condition.

### BACKGROUND

As used herein, the term "passenger service vehicle" encompasses vehicles for transporting passengers and, in particular, road vehicles for transporting passengers. Exemplary passenger service vehicles may be buses (single or double deck), coaches or the like.

Significant innovation and technology development has occurred in recent years in relation to passenger service vehicles. In particular, there has been a continued drive towards providing vehicles that have low running costs, and improved fuel efficiency, etc.

EP2781722A1 discloses a driving assistance apparatus outputting instructions to carry out accelerator off operation as driving assistance information, and cause a driver to conduct accelerator off operation at a predetermined position before a target stop position.

US2015232099A1 discloses a method to use GPS to optimize stopping distance to improve fuel economy. WO2015120872A1 discloses a method for operating a driver assistance system which provides assistance to the driver during a roll-over process, and motor vehicle. DE102016200717A1 discloses a method and device for performing a coasting function in a motor vehicle.

### SUMMARY

There are described control systems and methods for vehicles, such as passenger service vehicles. The described systems and methods may help reduce or optimise energy consumption, and in some cases, improve fuel efficiency, decrease emissions, reduce running costs, reduce maintenance costs, reduce vehicle downtime, improve operator performance, and the like.

According to an aspect of the invention there is provided: a control system for a passenger service vehicle according to claim 1.

The control system may be configured to determine, based at least partly on the location and velocity of the passenger service vehicle, how far the vehicle will coast if it were to start to coast at the current or a given location. The control system may be configured to determine the coasting condition by comparing how far the vehicle is determined to coast if it were to start to coast at the current or a given location with a distance from the vehicle's current location to the feature location.

The control system may be configured to determine how far the vehicle will coast at least partly based on one or more geographic properties, such as gradients, inclinations, straightness of the road, corners and/or the like. The control system may be configured to determine how far the vehicle will coast at least partly based on one or more environmental parameters such as wind direction, wind speed, air pressure, atmospheric temperature and/or the like. The control system may be configured to determine how far the vehicle will coast at least partly based on one or more properties of the passenger service vehicle, such as drag, rolling resistance, loaded and/or unloaded weight and/or the like. The control system may be configured to determine how far the vehicle will coast at least partly based on one or more learned parameters such as past coasting performance of the passenger service vehicle, such as how far the passenger service vehicle coasted in the past and/or rate(s) of reduction in velocity of the passenger service vehicle in the past. The learned parameters may be or comprise learned parameters for, associated with or near, e.g. within a threshold distance of, the current location.

The control system is configured to access or communicate with the database to obtain information regarding the plurality of feature locations. The information regarding the plurality of feature locations may comprise details regarding parts of the route near to or at feature locations that may affect the behaviour or movement characteristics of the vehicle such as inclination, traffic flow control features (e.g. speed-controlled sections of the route, traffic lights, and the like), junctions, corners, and the like. The information regarding the plurality of feature locations may comprise details regarding at least one operating parameter (e.g. location, speed, acceleration rate, deceleration rate, heading, yaw rate, weight, and the like) of the vehicle near to or at feature locations.

The information regarding the plurality of feature locations may be learned from making at least one trip along the route. The control system may be configured to identify feature locations, e.g. whilst or from making at least one trip along the route. The control system may be configured to determine whether or not an identified feature location is already stored in the database and may be configured to add an identified feature location only if it is not already in the database. The control system may be configured to characterise the identified feature location or to determine a feature location type based on one or more feature location profiles. The control system may be configured to characterise the identified feature location or determine the feature location type by comparing one or more or each of the at least one operating parameter of the passenger service vehicle with corresponding criteria of the feature location profile. Feature locations such as passenger stops, junctions, and the like may have a profile (e.g. the feature location profile) that can be associated with the feature location type. At least one operating parameter of the vehicle may be associated with criteria corresponding to the feature location profile. For example, a door opening while the vehicle is stationary may be indicative that the feature location type is a passenger stop, or the like. The information regarding the plurality of feature locations may comprise or be indicative of a feature location profile associated with feature location types.

The information may comprise established control rules for predicting behaviour of the passenger service vehicle along the route based on the information regarding the plurality of feature locations and the location and/or velocity of the passenger service vehicle.

The control system may be configured to obtain data from a data input indicative at least one operating condition of the passenger service vehicle. The control system may be configured to use the data to update the information. The data input may comprise at least one of: a vehicle sensor (e.g. configured to provide data regarding an operating parameter or state of the vehicle, or the like); communication module (e.g. configured to communicate with a network providing data regarding a vehicle state and/or at least one operating parameter of the vehicle, or the like); a subsystem (e.g. configured to provide data regarding a state or condition of the subsystem and/or data regarding an operating parameter of the vehicle, or the like); and the like. The subsystem may comprise at least one of: an engine; motive power unit; compressor; alternator; battery charger; door; door open/close sensor; suspension; brake; load or weight monitor; and the like.

The control system is configured to predict whether the passenger service vehicle will arrive at the feature location at the target velocity or higher, or within the target velocity range based on a current velocity at a current location of the passenger service vehicle.

The feature location profile indicative of a passenger stop may be indicative of a change in the number of passengers occurring at the passenger stop. The feature location profile indicative of a passenger stop is based at least in part on at least one of: an output of a door open/close sensor indicating that a door of the passenger service vehicle has been opened and closed, an output of a weight sensor and/or passenger ticketing information and may comprise criteria including at least one of: vehicle speed being less than or equal to a threshold (e.g. vehicle speed equals zero); a rate of change of velocity (e.g. deceleration, or the like) associated with the feature location profile; and/or any other data input or subsystem indicative of the feature location being a passenger stop.

If a passenger stop is identified, the control system may be configured to compare the current location with each existing location in the database. If any existing feature is seen to be with a predetermined distance of the current location, the control system may deem that the current stop is the same as the existing stop. If no features are within the predetermine distance, then at least one of: the current location; last recorded location(s), heading(s), inclination(s), average inclination(s), vehicle speed(s), acceleration(s), deceleration(s), yaw rate(s), and the like, before and/or at the feature location may be stored in the database.

The database may comprise at least one array comprising information regarding the plurality of feature locations. The database may comprise information regarding the plurality of features and/or information regarding at least one operating condition associated with the plurality of feature locations.

The plurality of feature locations may comprise a junction. The control system may be configured to identify the junction at least partly based on a feature location profile indicative of a junction. The feature location profile indicative of a junction may be indicative of the vehicle slowing down or stopping at the junction. The feature location profile indicative of a junction may comprise criteria including at least one of: vehicle speed being less than or equal to a threshold (e.g. vehicle speed equals zero); a rate of change of velocity (e.g. deceleration, acceleration or the like) associated with the feature location profile; and/or any other data input or subsystem indicative of the feature location being a junction.

The control system may be configured to identify a start point of the junction. The start point may be identified via a speed or speed limit, or other operating parameter, of the vehicle. The control system may be configured to monitor at least one of: yaw rate; speed; distance from the start point; and any other operating parameter.

The control system may be configured to recognise that if the vehicle slows to less than a predetermined speed, an approach to a feature such as a junction, corner, traffic flow control feature, or the like may be recognised. Below the predetermined speed, the control system may be configured to store at least one operating parameter of vehicle associated with the junction, corner, or the like.

If the vehicle meets one or more other criteria before moving more than a predetermined distance from the location of the feature, a new feature may be detected by the control system. The one or more other criteria may comprise at least one operating parameter of the vehicle being within a predetermined range. For example, the criteria may comprise at least one of: yaw rate > a predetermined yaw rate, threshold or range (e.g. in X deg/s), the current heading to a stored heading > a predetermined heading change, threshold or range (e.g. X deg); speed < a predetermined speed. The newly detected feature may be checked for proximity to existing features in the database (e.g. to prevent duplication), and if appropriate, the newly detected feature may be stored in the database.

The control system may be configured to calculate a coast range of the passenger service vehicle. The coast range may be based on at least one of: a vehicle speed; deceleration rate; average deceleration rate; inclination of the vehicle; and any other information regarding the plurality of features and/or operating parameters of the vehicle.

The coast range may be calculated individually for each feature in the database. The coast range may be a function of at least one operating parameter of the vehicle. Information associated with the plurality of features may be utilised to calculate the coast range for each feature. The control system may be configured calculate or record at least one operating parameter of the vehicle and stored information regarding the at least one operating parameter in the database. The control system may be configured to store the information while certain operating conditions are true. For example, the operating conditions may comprise at least one of: accelerator pedal position < a predetermined position; a predetermined rate of change of position; brake pedal position < a predetermined position; brake pedal position change < a predetermined position change; vehicle speed > a predetermined speed; and the like

The control system may be configured to predict a heading of the vehicle. The heading may be based on at least one of: a vehicle speed; yaw rate; coast range of the vehicle; and any other information regarding an operating parameter of the vehicle.

The control system may be configured to determine whether the vehicle can activate the coasting condition based on at least one operating parameter of the vehicle being within a predetermined range.

A plurality of operating parameters may be checked in order to determine whether the vehicle should enter a coast. These operating parameters may be checked for each feature in the database. In an example, at least one of the following operating parameters may need to be true if the vehicle is considered ready to enter coast mode, for example, at least one of: the distance from the current location may be < the coast range for the feature; the heading from the current location to the feature location may be equal to a predicted heading (or may be within a predefined tolerance range thereof); the heading at the feature location may be equal to a predicted heading (or may be within a predefined tolerance range thereof). In an example, if at least one of these conditions associated with the operating parameters are not true then at least one other function or mode of the control system may be activated. For example, the control system may be configured to calculate the coast range, predicted heading; detect coasting, or the like, until the coasting condition can be activated.

The control system may be configured to set the coasting condition to active if the vehicle can coast without being under motive power to arrive at the feature location at a velocity that is a target velocity or higher, or within a target velocity range. The control system may be configured to set the coasting condition to inactive if at least one operating parameter of the vehicle changes to be within a predetermined range.

If the coasting condition is active, the indication may signal to the vehicle operator or drive and/or a powertrain of the vehicle to cease providing additional torque to a driveline of the vehicle. This coasting condition may remain latched until at least one of the following conditions are true, for example: a vehicle speed < a predetermined speed; a rate of change of accelerator pedal position > a predetermined rate of change; accelerator pedal position > a predetermined position. In an example, tf any of these conditions become true then the coasting condition may be set to inactive. If inactive, the indication may send/stop sending an appropriate signal to vehicle operator and/or the signal powertrain such that the vehicle is no longer in a coast mode.

The coasting condition may become active when the vehicle is able to reach the feature location at the target velocity. The coasting condition may become active if the vehicle would reach the feature location at a higher speed than the target velocity. The vehicle may reach the feature at a lower speed (or not at all) for the period before the coasting condition becomes active.

The control system may be configured to control energy consumption by the passenger service vehicle upon providing the indication that the passenger service vehicle should begin to coast.

The control system may be configured to minimise energy consumption by a powertrain of the passenger service vehicle upon receiving the indication that the passenger service vehicle should begin to coast.

The control system may comprise an operator indicator configured to prompt an operator of the passenger service vehicle to control energy consumption by the passenger service vehicle upon providing the indication that the passenger service vehicle should begin to coast. The operator indicator may comprise a visual, audible and/or physical prompt for the operator of the vehicle. For example, the operator indicator may comprise: a light or display system; sound system; vibration system, or the like. Upon the operator identifying the prompt, the operator may take action such that the vehicle can begin to coast.

The control system may comprise or may be configured to access a location based system configured to determine the location of the passenger service vehicle.

The control system may comprise at least one processor configured to perform at least one function of the control system.

According to an example beyond the scope of the invention, there is provided: a control or processing system for a passenger service vehicle. The control or processing system may comprise or be configured to access or communicate with a database. The control or processing system may comprise or be configured to access or communicate with a vehicle information system. The vehicle information system may provide at least one operating parameter of the passenger service vehicle, such as velocity and/or location of the passenger service vehicle. The control or processing system may be configured to determine a feature location along a route of the passenger service vehicle by matching the at least one operating parameter of the vehicle with a characteristic pattern associated with a type of feature location, and may store feature location data, such as the location of the feature location, in the database when a match is determined.

The control or processing system may be configured obtain information regarding the feature location, and optionally a plurality of feature locations along the route. The information regarding the feature location may comprise details regarding parts of the route near to or at the feature location that may affect the behaviour or movement characteristics of the vehicle such as inclination, traffic flow control features (e.g. speed-controlled sections of the route, traffic lights, and the like), junctions, corners, and the like. The information regarding the feature location may comprise details regarding at least one operating parameter (e.g. location, speed, acceleration rate, deceleration rate, heading, yaw rate, weight, and the like) of the vehicle near to or at feature location. The control system may be configured to identify the characteristic pattern associated with the feature location(s) by using the information from one or more operating parameters and/or the information regarding the feature location(s). The control or processing system may be capable of learning information regarding the feature location or plurality of feature locations for future use, for example, if the vehicle follows the route again e.g. on a regular basis. The information may be used such that the control or processing system may be configured to calculate at least one appropriate or optimised operator parameter for the vehicle and/or provide an indication that may be used to modify or optimise the driving characteristics of the vehicle. The information regarding the feature location or plurality of feature locations may be learned from making at least one trip along the route.

According to an example beyond the scope of the invention, there is provided: a control system for a passenger service vehicle. The control system may comprise any control system of any aspect, example or embodiment described herein. The control system may be configured to issue an instruction to divert energy for driving the passenger service vehicle to at least one other sub-system of the passenger service vehicle if the control system predicts that the passenger service vehicle will approach the feature location at the target velocity or higher, or within the target velocity range if the energy is diverted to the at least one other sub-system.

The control system may be used to indicate that the energy saved by coasting to the feature location can be at least partially used by or diverted to at least one other subsystem of the vehicle. In some examples, at least one of the subsystems of the vehicle may require energy in order to provide the subsystem functionality. For example, an alternator, compressor, or the like may need to use energy on a continuous, continual or occasional basis, or the like. Providing energy for these subsystems may have an energy and/or fuel efficiency cost implication. The control system may calculate that, during certain periods, that there may be an energy and/or fuel saving to at least partially divert energy from one subsystem to at least one other subsystem. For example, during a coast to a feature location, the powertrain may be configured to provide energy for at least one other subsystem other than providing torque for the driveline/wheels. In other words, the powertrain may still be consuming energy/fuel during the coast, but it may be more efficient overall to provide energy, e.g. via the powertrain and/or other subsystem such as a battery, to the at least one other subsystem during the coast to the feature location.

According to an example beyond the scope of the invention, there is provided: a control system for a passenger service vehicle. The control system may comprise any control system of any aspect, example or embodiment described herein. The control system may be configured to compare an actual energy usage of an operator of the passenger service vehicle along the route with an optimised energy usage along the route calculated by the control system. The control system may be configured to provide performance data on the operator based on the compared energy usage.

The control system may be configured to calculate a minimum or optimised energy use of the vehicle, for example, based on an ideal scenario where the driver drives in an efficient manner (e.g. by avoiding unnecessary heavy acceleration or braking). By comparing the operator's actual energy use with the minimum or optimised energy use, the control system may provide data to help the vehicle operator or a route operator identify whether any driving characteristics can be modified to help reduce or optimise energy usage. The control system may be capable of identifying certain sections of the route as being associated with higher than necessary energy usage.

It will be appreciated that the control system according to the invention may have utility in any appropriate vehicle, including cars, and the like.

According to an aspect of the invention, there is provided: a method of operating a passenger service vehicle according to claim 14.

The method may comprise determining how far the vehicle will coast at least partly based on one or more learned parameters such as past coasting performance of the passenger service vehicle.

The method may comprise learning the information regarding the plurality of feature locations by making at least one trip along the route.

The method may comprise establishing control rules using the information. The control rules may predict behaviour of the passenger service vehicle along the route based on the information regarding the plurality of feature locations and the location and/or velocity of the passenger service vehicle.

The method may comprise obtaining data from a data input indicative of at least one operating condition of the passenger service vehicle. The method may comprise using the data to update the information.

The method may comprise predicting whether the passenger service vehicle will arrive at the feature location at the target velocity or higher, or within a target velocity range based on a current velocity at a current location of the passenger service vehicle.

The plurality of feature locations may comprise at least one junction.

According to an aspect of the invention, there is provided a computer program product comprising the features of claim 15.

### BRIEF DESCRIPTION OF THE DRAWINGS

A description is now given, by way of example only, with reference to the accompanying drawings, in which:-
Figures 1 and 2 depict examples of passenger service vehicles;
Figure 3 depicts a control system for the passenger service vehicles of Figures 1 and 2;
Figure 4 depicts an example of a route that may be followed by the passenger service vehicles of Figures 1 and 2;
Figure 5 depicts a logic flow diagram for the operation of the control system of Figure 3; and
Figure 6 depicts a further logic flow diagram for the operation of the control system of Figure 3.

### DETAILED DESCRIPTION OF EMBODIMENTS

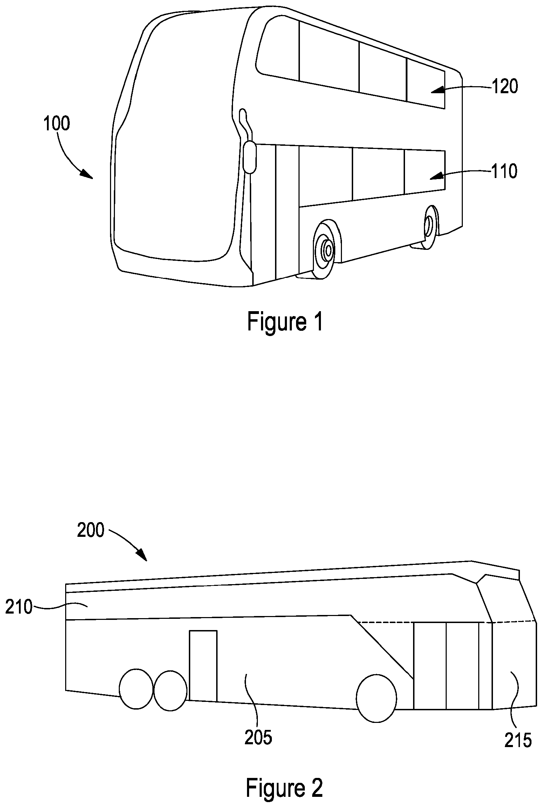

Figure 1 shows a perspective representation of a passenger service vehicle 100, which, in this example, is shown as a vehicle 100 having both a lower passenger deck 110 (lower deck) and an upper passenger deck 120 (upper deck). Such vehicles 100 are commonly referred to as twin-deck, or double-deck, vehicles 100, and comprise a plurality of passenger seats on each deck.

Figure 2 shows a perspective representation of an alternative passenger service vehicle 200, having essentially only a single passenger deck 210 (albeit there may be provided a few passenger seats on lower sections of the vehicle also). The vehicle 200 shown in Figure 2 can be considered to be a coach-type vehicle, in which the passenger deck 210 may be elevated above a luggage locker area 205, or the like. In some examples of such vehicles, the passenger deck 210 may extend for substantially the length of the vehicle 200, and so above a driver's cab (as shown by the dashed lines 215). Other single deck vehicles 200 are also known.

The examples of passenger service vehicles 100, 200 shown in Figures 1 and 2 are conventional vehicles in which traction is provided by an internal combustion engine. However, it will also be appreciated that the vehicles 100, 200 may alternately be hybrid electric or electric powered vehicles, and may use different powertrains or "engines". While, for the purposes of the following description reference will be made to vehicles using an internal combustion engine, nevertheless a skilled reader will recognise that the invention need not be so limited. Further, while described in relation to passenger service vehicles and the particular driving conditions that are experienced by such vehicles, it will be appreciated that the aspects and features described below may, in some cases, be utilised by other vehicles that may follow a regular, predictable or repeated route, such as delivery vehicles, distribution vehicles, trucks, and the like.

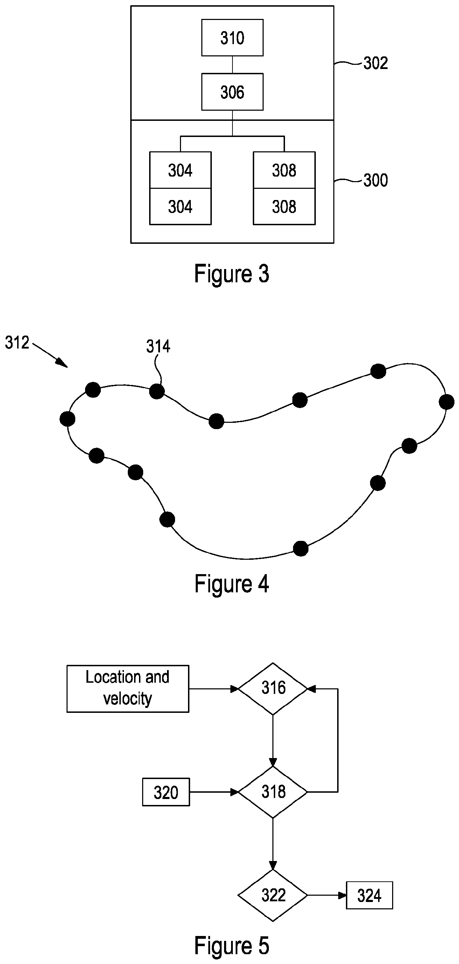

Figure 3 shows a schematic representation of an example control system 302 for a passenger service vehicle (hereinafter "vehicle") 300. The control system 302 is configured to control at least one of a plurality of subsystems 304 of the vehicle 300. The control system 302 is configured to control the plurality of subsystems 304, for example, to control a mode of operation of the vehicle 300. The subsystems 304 may comprise an engine or motive power unit and the control system 302 may be configured to control the engine or motive power unit. Further examples of subsystems 304 include: a compressor, alternator, battery charger, or the like of the vehicle 300. The control system 302 comprises a processor 306 configured to process information in order to control the plurality of subsystems 304. In this example, the information comprises data obtained from at least one of a plurality of data inputs 308 associated with the vehicle 300 and/or information comprised in a database 310 (e.g. a stored database, or the like) of the control system 302. The control system 302 may be configured to obtain data from a data input 308 indicative at least one condition of the vehicle 300. Examples of data inputs 308 may include: vehicle sensors configured to provide data regarding an operating parameter (such as velocity, location, weight, and the like) or vehicle state of the vehicle 300; communication modules configured to communicate with a network providing data regarding a vehicle state and/or at least one operating parameter of the vehicle 300, driver characteristics (such as a driving behaviour of the driver or operator of the vehicle), subsystems 304 configured to provide data regarding a state or condition of the subsystem 304 and/or data regarding an operating parameter of the vehicle 300; and the like. The vehicle 300 may comprise the control system 302 or the control system 302 may be at least partially configured to be implemented externally of the vehicle 300, for example, on a server configured to communicate (e.g. wirelessly) with the vehicle 300. The control system 302 may be integrated into an existing vehicle control or processing system that carries out other functions of the vehicle (e.g. by specifically designing the vehicle control system or by retrofitting or reprogramming) or it may be carried out by a separate control system 302, which optionally communicates with an existing vehicle control and processing system. A separate control system 302 could readily lend itself to retrofitting.

In this example, the control system 302 is configured to determine a location and velocity of the vehicle 300 along a route (see Figure 4), the route comprising a plurality of features. The control system 302 is configured to determine, based at least partly on the determined location and velocity of the vehicle 300, that a coasting condition has been met, wherein the coasting condition is a condition in which the vehicle 300 can coast without being under motive power to arrive at the location of the feature. The control system 302 can provide a signal to the driver and/or automatically switch to a coast mode based on the coasting condition being met. In an example, the control system 302 determines how far the vehicle would coast if it were to start coasting and determines if the vehicle would reach the feature (at least at a specified velocity or within a specified range of velocity) by coasting, i.e. if the distance to the feature is the same or less than the distance the vehicle would travel along the route if it were to start coasting. In this case, the coasting condition would be met if the vehicle could reach the feature (optionally at least at the specified velocity or within the specified range of velocity) and not be met if it could not. In another example, the control system 302 is configured to predict a velocity and/or location at which the vehicle 300 can begin to coast such that the vehicle 300 is predicted to arrive at a feature at a target velocity or higher, or within a target velocity range and to provide an indication that the vehicle 300 should begin to coast based on the velocity and/or location with respect to the predicted velocity and/or location.

In an example, the control system 302 is configured to access or communicate with the database 310 comprising a plurality of feature locations along a route of the vehicle 300 (as described herein). The control system 302 is configured to access or communicate with a vehicle information system providing at least one operating parameter of the vehicle 300, such as velocity and/or location of the vehicle 300. The vehicle information system may comprise or be configured to access or communicate with at least one of the plurality of subsystems 304 of the vehicle 300 and/or at least one of a plurality of data inputs 308. The at least one operating parameter of the vehicle 300 may be obtained from the one or more subsystems 304 and/or from at least one of the plurality of data inputs 308 associated with the vehicle 300. The control system 300 is configured to determine, based at least partly on the at least one operating parameter of the vehicle 300, a coasting condition associated with vehicle 300 under which the vehicle 300 can coast without being under motive power to arrive at the feature location at a velocity that is a target velocity or higher, or within a target velocity range; and to provide an indication that the vehicle 300 should begin to coast based on the coasting condition. In an example, the control system 302 is configured to determine how far the vehicle 300 will coast at least partly based on one or more learned parameters such as past coasting performance of the vehicle 300. The past coasting performance may comprise at least one of the following parameters: acceleration, deceleration, speed, heading, weight, road condition, driver behaviour (e.g. energy use, accelerator use, brake use, or the like), and the like of the vehicle 300 for a given location or section along the route 312. The learned parameters are or may comprise learned parameters for, associated with or near the current location. Examples of learned parameters comprise: whether the vehicle 300 is at a passenger stop, the characteristics of how the vehicle 300 approaches the feature location (e.g. the deceleration when no or reduced motive power is applied to the vehicle), or the like.

Figure 4 shows a schematic representation of a route 312 for the vehicle 300. The route 312 comprises a plurality of features 314 (which may also be referred to as feature locations 314) such as passenger stops, traffic flow control features (e.g. traffic lights, junctions, roundabouts, and the like), corners, gradients, speed control zones, and the like. The features 314 are preferably features where the vehicle is required or likely to slow down or stop whilst on the route. The route 312 may be a regular, predictable or repeated route for the vehicle 300 such as may be followed by passenger service vehicles, delivery vehicles, distribution vehicles, trucks, and the like. As the vehicle 300 tends to repeat the same route, the vehicle 300 may be required to make repeated stops (or at least slow down) for at least one of the plurality of features 314. These kinds of vehicle 300 may be operated or driven in a particular manner, for example, due to being required to make repeated stops (or at least slow down) at the plurality of features 314. This kind of operation or driving characteristic may be distinguished from, for example, some cars which may be driven at a constant speed for long periods of time e.g. on a motorway or highway. However, it will be appreciated that, depending on driving characteristics, the control system 302 may have utility in some cars and other vehicles.

In the present example, the vehicle 300 is a bus or coach (or other passenger service vehicle) that picks up and drops off passengers from a plurality of features 314 in the form of passenger stops 314 (e.g. bus stops, or the like) along the route 312, although it will be appreciated that the invention is not limited to this. Typically, the vehicle 300 will make a plurality of trips along the same route 312 in order to provide a regular service for the passengers. This kind of service requires repeated slowing down and speeding up of the vehicle 300 and typically involves a loss of energy (e.g. due to braking from a speed appropriate for the driving conditions and accelerating back up to the speed again) and hence a greater energy consumption compared with a different driving or operating characteristic of the vehicle 300 (such as for long distance driving without repeated stops).

Optionally, the control system 302 may be configured to control at least one subsystem 304 of the vehicle 300 upon the control system 302 providing an indication that the vehicle 300 should begin to coast based on the velocity and/or location with respect to the predicted velocity and/or location. The control system 302 determines if the vehicle 300 is approaching a passenger stop 314 by comparing a location of the vehicle 302 with the location of the passenger stop 314 that has been identified previously. The location is of the vehicle 302 is determined using data obtained from at least one of a plurality of data inputs 308 associated with the vehicle 300. In addition, the velocity of the vehicle 302 is also determined using data obtained from at least one of a plurality of data inputs 308 and can be used in conjunction with the compared locations to predict, for example, when the vehicle 302 will arrive at a certain location.

The information associated with the features 314, such as passenger stops (for example, location, route profile information such as gradient of the road leading to the stop 314, and the like) is stored in the database 310. Beneficially, the information associated with the features 314, such as passenger stops, can be automatically collected and/or updated in use as the vehicle 300 repeatedly travels the same route. The control system 302 utilises the information associated with the passenger stops 314 to make a decision on whether there needs to be a change in an operating characteristic (e.g. switching on/off or changing energy consumption of a subsystem 304 such as a powertrain of the vehicle 300, or the like) of the vehicle 300 in order to reduce or optimise energy consumption of the vehicle 300.

Figure 5 represents an example logic flow diagram for the operation of the control system 302 as the vehicle 300 travels along the route 312 and is required to stop at the passenger stops 314 (or any other features along the route 312). In a first step 316, the control system 302 determines the location and velocity of the vehicle 300. In a second step 318, the control system 302 determines the distance that the vehicle 300 will coast along the route 312 from its current velocity and location down to a target velocity and the distance along the route from the present vehicle 300 location to the location of the feature 314, e.g. the bus stop. If the vehicle 300 is not predicted to arrive at the passenger stop 314 based on the current velocity and location of the vehicle, i.e. if the distance to the feature 314 is greater than the distance that the vehicle 300 will coast, the first step 316 is repeated. If the vehicle is predicted to arrive at the passenger stop 314 at a target velocity 320 or less, or within a target velocity range, i.e. if the distance to the feature 314 is the same or less than the distance that the vehicle 300 will coast, in a third step 322, the control system 302 provides an indication 324 that the vehicle 300 should begin to coast. The target velocity 320 is set such that, on approaching the passenger stop 314, limited energy is lost due to any braking force applied to the vehicle 300 compared with if a larger braking force is required if the vehicle 300 is travelling at a velocity greater than the target velocity 320 on approaching the passenger stop 314.

While the above gives a specific example of determining a coasting condition based on the distance that the vehicle 300 will coast and comparing it with the distance along the route to the feature, it will be appreciated that other techniques could be used. For example, in another embodiment, the control system 302 could predict a velocity and/or location at which the vehicle 300 can begin to coast such that the vehicle 300 is predicted to arrive at a passenger stop 314 at the target velocity 320 or less, or within a target velocity range. If the vehicle is predicted to arrive at the passenger stop 314 at the target velocity 320 or less, or within a target velocity range, then the control system 302 provides an indication 324 that the vehicle 300 should begin to coast based on the determined velocity and/or location of the vehicle 300 with respect to the predicted velocity and/or location.

In an example, the indication 324 is provided if the coasting condition associated with the vehicle 300 is satisfied or activated. If the coasting condition is satisfied or activated, the indication 324 is provided that the vehicle 300 can coast without being under motive power to arrive at the feature location at a velocity that is a target velocity or higher, or within a target velocity range. Optionally, the indication 324 may be provided upon the vehicle 300 moving at a velocity (e.g. if a current velocity equals the predicted velocity) at a location (e.g. if a current location equals the predicted location) if the control system 302 predicts that the vehicle 300 will arrive at the passenger stop 314 at the target velocity 320 or less, or within a target velocity range. Optionally, the control system 302 may be configured to arrive at a sufficient velocity (i.e. greater than zero or within the target velocity range) so that traffic flow along the route 312 is not adversely affected due to the low rate of deceleration and/or acceleration of the vehicle 300. For example, the control system 302 may be configured to predict that the vehicle 300 will arrive at the passenger stop 314 at the target velocity 320 or higher, or within a target velocity range. The target velocity may be set so as to reduce the likelihood of traffic flow being adversely affected by the coasting of the vehicle 300.

It will be appreciated that the location and/or velocity at which the coasting condition is satisfied or activated may depend on a number of factors. For example, the route gradient, route conditions, vehicle weight, and the like may affect where, prior to the passenger stop 314, and at what velocity the indication 324 is provided. It will be appreciated that, in examples where the control system 302 predicts locations and/or velocities for coasting, the particular location and velocity at which the indication 324 is provided may depend on a number of factors. For example, if the vehicle 300 is moving with a relatively higher velocity at a location, then the location at which the indication 324 is provided may be further from the passenger stop 314 compared with if the velocity has previously been lower at the location. Similarly, if the vehicle 300 is moving with a relatively lower velocity at a location, then the location at which the indication 324 is provided is closed to the passenger stop 314 compared with if the velocity has previously been higher at the location..

The indication 324 to coast can be used to advise a vehicle operator (e.g. a driver) when it is possible to coast the vehicle 300 to arrive at the passenger stop 314 at the target velocity 320 or less, or within a target velocity range. Alternatively or additionally, the indication 324 to coast can be used to automatically control a powertrain (not shown) of the vehicle 300 so that reduced or zero torque is applied to the vehicle 300 wheels. By coasting to the passenger stop 314, less energy may be used to arrive at the passenger stop 314 compared with if heavy braking is required to bring the vehicle 300 to a halt at the stop 302 since heavy braking converts the kinetic energy of the vehicle 300 into heat.

In addition to reducing energy consumption of the vehicle 300, in some examples, the control system 302 may help to at least one of: improve fuel efficiency, decrease emissions, reduce running costs, reduce maintenance costs, reduce vehicle downtime, improve operator performance, and the like. In an example, testing of the control system 302 has demonstrated a reduction of fuel consumption in the range 5 to 15 %, which represents a significant saving for a passenger service vehicle 300 operator. Depending on driving behaviour, different fuel consumption savings may be realised. In the example where the powertrain of the vehicle is an internal combustion engine powered by a fossil fuel, the control system 302 may help to reduce emissions (e.g. carbon dioxide, nitrogen oxides, particulars, and the like) by allowing the internal combustion engine to reduce fossil fuel consumption during coasting. Similar considerations may apply to hybrid or fully electric powertrains which derive electrical energy from fossil fuel sources. In addition, passengers 318 on the vehicle 300 may experience a smoother, more comfortable and safer journey since less harsh deceleration (e.g. due to less hard braking) may be experienced during coasting.

In this example, the control system 302 comprises a location based system configured to use at least one of the plurality of data inputs 308 (e.g. sensors, communication modules, and the like) to determine the location of the vehicle 300. For example, the location based system may comprise at least one of: an inertial navigation system, a Global Navigation Satellite System (GNSS) (for example, Global Position System (GPS), GLONASS and Galileo, and the like), a cellular network, wireless network, or the like to determine a current location of the vehicle 300.

The control system 302 also uses at least one of the plurality of data inputs 308 to determine a current velocity of the vehicle 302. The current velocity may be determined by a data input 308 in the form of a speedometer and/or may be determined using data provided by the location based system.

Further features of the control system 302 are now described. It will be appreciated that these features may be optional and/or may complement the functionality of the control system 302 described previously.

In an example, the control system 302 is configured to determine (e.g. by learning based on previous trips along the route 312) which of the plurality of features 314 correspond to passenger stops 314 based on whether a change in number of passengers on the vehicle 300 is likely to occur at any of the features. At least one of the data inputs 308 is configured to detect a change in the number of passengers. Possible data inputs 308 include at least one of a door open/close sensor, a weight sensor, passenger ticketing information. The control system 302 is configured to associate any changes in the number of passengers with corresponding locations along the route 312. The information comprises in the database 310 may be updated as a result of the control system 302 associating a location along the route 312 with a passenger stop 314. If the vehicle 300 approaches the passenger stop 314 again, the control system 302 recognises that the vehicle 300 may be required to stop at the passenger stop 314 and, if appropriate, may indicate that the vehicle 300 should coast to the passenger stop 314 at an appropriate location and velocity prior the passenger stop 314.

In an example, the control system 302 is configured to predict a heading of the vehicle 300 along the route 312. The heading may be based on the current location and velocity and/or based on information comprised in the database 310. Some routes 312 may have a plurality of passenger stops 314 at the same or approximately the same location (for example, one passenger stop 314 at either side of a road). Depending on the heading of the vehicle, the vehicle 300 may decide whether or not it is appropriate to coast to the passenger stop 314.

In an example, the control system 302 is configured to control a vehicle subsystem 304 in the form of an operator indicator configured to prompt an operator (e.g. a driver) of the vehicle 300 to control energy consumption by the vehicle 300 (e.g. by coasting) upon providing the indication 324 that the passenger service vehicle should begin to coast. The operator indicator is configured to provide a light and/or sound-based indication for the operator so that the operator knows when it is possible to coast the vehicle 300. The operator may make a decision to ignore the indication 324, for example, if the vehicle 300 does need to stop at the passenger stop 314. Alternatively or additionally, the control system 302 is configured to control (e.g. automatically control) a vehicle subsystem 304 such as a powertrain of the vehicle 300 upon receiving the indication 324 that the vehicle 300 should begin to coast and then the vehicle 300 will coast unless the coasting is overridden by the operators.

In an example, the control system 302 is configured to compare an actual energy usage of an operator of the vehicle 300 along the route with an optimised energy usage along the route 312 calculated by the control system 302. The control system 302 is configured to provide performance data on the vehicle operator based on the compared energy usage. The performance data may be used to provide a service operator with information on the vehicle operator to evaluate their performance in terms of energy usage. Since energy is a significant cost to the service operator, the ability to determine how effectively the vehicle operator is using energy in driving the vehicle may be useful for identifying ways for the vehicle operator to minimise energy usage.

In an example, the control system 302 is configured to automatically learn information regarding the plurality of features 314 by making at least one trip along the route 312. At least one of the data inputs 308 may be used to provide information. The learned information may be stored in the database 310. By automatically learning the information, the control system 302 may be able to run independently without requiring an external input to provide at least some of the information. For example, the control system 302 may be installed on a vehicle 300 and, through use, the control system 302 may learn the optimum way for the vehicle 300 to be driven or operated along the route 312 such that the energy consumption may be minimised. The control system 302can learn information regarding the plurality of features 314 (e.g. such as gradients, local conditions, or the like) which may not otherwise be available via other data sources (e.g. pre-existing maps, or the like). Furthermore, the control system 302 may be configured to learn behaviours of the vehicle associated with the features 314, e.g. the rate of decrease whilst coasting at given locations within a given distance of the feature 314 locations.

In examples where the control system 302 predicts the velocity and/or location at which the vehicle 300 can begin to coast, the information may comprise established control rules for predicting behaviour (e.g. movement characteristics such as acceleration, deceleration, speed, heading, or the like) of the vehicle 300 along the route 312 based on the information regarding the plurality of features 314 and the location and/or velocity of the vehicle 300. The control rules may, for example, be used to determine whether or not the vehicle 300 can coast from a certain location at a certain velocity. The control system 302 may be able to interpolate the movement characteristics of the vehicle 300 (e.g. predicted acceleration, deceleration, velocity, or the like) for a given set of parameters (e.g. gradient, vehicle weight, torque applied by the powertrain, and the like) based on the control rules. For example, the control system 302 may be able to interpolate that the vehicle 300 will decelerate at a certain rate when coasting (and hence will affect the predicted velocity and/or location where the vehicle 300 can begin to coast) for a given vehicle weight and/or road gradient even if the vehicle 300 has not previously travelled along the route 312 at that particular location and/or velocity with that particular weight.

In an example, the control system 302 is configured to obtain data from at least one of the plurality of data inputs 308. Since the data inputs 308 may be indicative of at least one condition of the vehicle 300 at a certain location and/or velocity, the control system 302 may use the data to update the information in the database 310.

Although coasting is described above, it will be appreciated that similar principles could be applied to other energy saving mechanisms, for example, the control system 302 may recognise that another subsystem 304 (such as a compressor, alternator, battery charger, or the like) may require energy to be diverted thereto if the vehicle 300 is operating or is required to operate in a certain way or if it would be more energy efficient to use energy in a different way. The vehicle 300 may coast to the passenger stop 314 (or any other feature) in a similar manner as described herein. However, the way in which the energy is required to be used may be different to the other examples described herein. For example, energy may be consumed by another subsystem 304 of the vehicle 300 while the vehicle 300 is coasting because to do so may provide an overall saving of energy and/or another benefit. Therefore, the control system 302 may be configured to issue an instruction to divert energy for driving the vehicle 300 to at least one other sub-system 304 of the vehicle 300 if the control system 302 predicts that the vehicle 302 will approach the feature at or below the target velocity 320 if the energy is diverted to the at least one other sub-system 304.

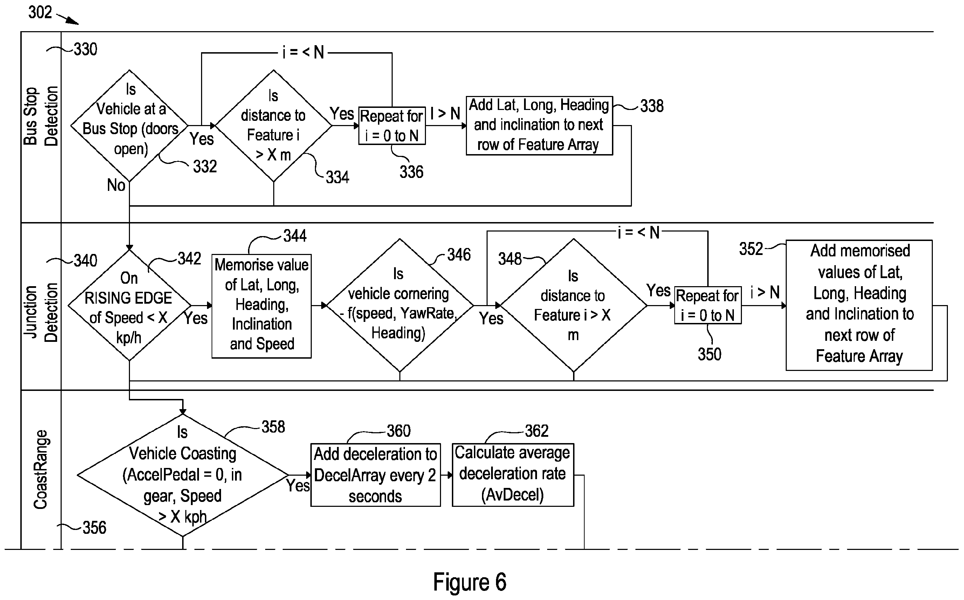

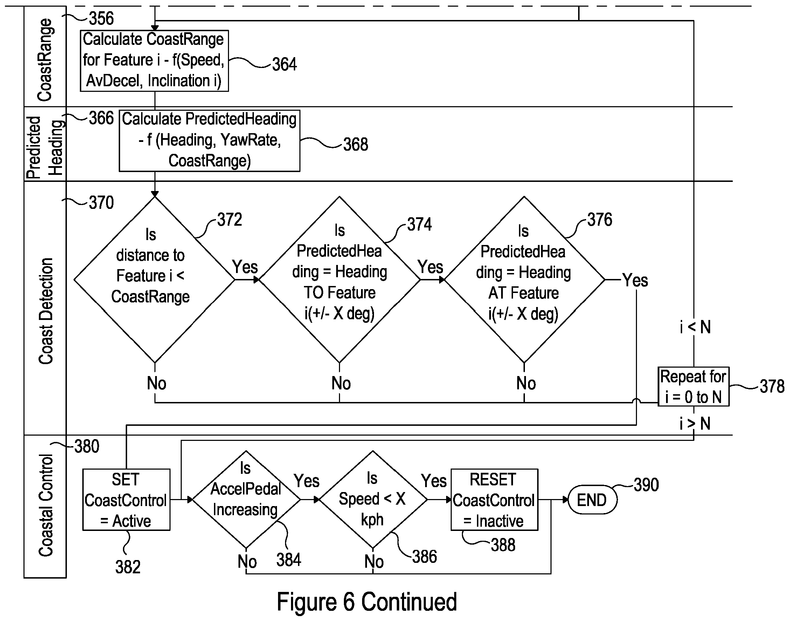

Figure 6 represents a further example logic flow diagram for the operation of the control system 302 for the passenger service vehicle 300. The control system 302 of Figure 6 comprises the same or similar features to those described in relation to Figures 3 to 5. Where appropriate, any reference to a feature 314 may refer to a passenger stop 314 or any other feature, or vice versa. Further details of the control system 302 are described below.

The control system 302 is configured to automatically identify and collect information about features 314 such as passenger stops along its route. In particular, each type of feature 314, such as a passenger stop or junction, is associated with a particular profile of data from the data inputs 308. The control system 302 is configured to compare the data it receives from the data inputs 308 with the profiles for each type of feature 314 and determine that a particular type of feature could be present if the received data matches the profile for that type of feature 314.

The control system 302 comprises a stop detection module 330 for detecting whether the vehicle 300 is at a passenger stop 314. The stop detection module 330 implements the automatic detection and collection of information regarding passenger stops 314, as a particular example of feature type. In a first step 332, the stop detection module 330 determines whether the vehicle 300 is at a passenger stop 314 (e.g. if the vehicle 300 is stationary and the vehicle 300 door opens and/or via data provided by at least one of the plurality of data inputs 308). Whilst the condition for the first step 332 is true, the distance from the current location to the location of each existing feature 314 is checked (the features 314 in the feature array are denoted by 'i' for the `i-th' feature 314 in the feature array). If any existing feature 314 is seen to be within a predetermined distance (e.g. in the order of 10, 20, 30, 50 metres, or the like) of the current location, it is deemed that the current feature 314 is the same as the existing feature and no action is taken. Therefore, if the stop detection module 330 determines that 'yes' the vehicle 300 is at a passenger stop 314, in a subsequent step 334, the stop detection module 330 is configured to determine if the distance from the current location of the vehicle 300 to the i-th feature 314 is greater than the predetermined distance. If 'yes' then in a subsequent step 336, the stop detection module 330 is configured to repeat step 334 for the number of features N stored in a feature array comprised in the database 310. If 'no' is the final outcome for either of steps 332 or 334, then the next step is carried out in a subsequent module described below. However, if no existing features 314 are within the predetermined distance of the current location then, in a subsequent step 338, at least one of: the current location, last recorded heading, average inclination in the preceding period and vehicle speed of the vehicle 300 are stored in the feature array (e.g. in the next line of the feature array).

The control system 302 further comprises a junction detection module 340. The junction detection module 340 implements the automatic detection and collection of information regarding junctions, as a particular example of feature type. In a first step 342, if the vehicle 300 slows to less than a predetermined speed in the order of a few kilometres per hour (e.g. 10 kph, 20 kph, 30 kph, or the like), the junction detection module 340 recognises that it is possible that the vehicle 300 is approaching a junction or sharp corner. At the point of the speed dropping below the predetermined speed, the current location, heading, inclination over the preceding period and vehicle speed are temporarily memorised/stored (e.g. in the database 310 or another memory) in a subsequent step 344.

If the vehicle 300 meets a number of other criteria before moving more than a predetermined distance from the temporarily memorised current location, a new feature 314 is detected. In this example, additional criteria are evaluated in a subsequent step 346 that determines whether the vehicle 300 is at a junction or cornering. In the present example, the step 346 comprises determining whether: the vehicle 300 yaw rate is greater than a predetermined yaw rate in the order of 5, 10, 20 30 degrees/s, or the like; a vehicle current heading minus a stored heading is greater than a predetermined angle in the order of 30, 45, 90 degrees, or the like; and the current speed is less than a predetermined speed in the order of 10, 20, 30 kph, or the like. If 'yes' then a new feature 314 has been detected, the newly detected feature 314 is checked for proximity to locations stored in the feature array (e.g. as in the stop detection module 330). In this example, if the junction detection module 340 determines that 'yes' the vehicle 300 is at a junction or cornering, in a subsequent step 348, the junction detection module 340 is configured to determine if the distance from the current location of the vehicle 300 to the i-th feature 314 is greater than a predetermined distance in the order of 10, 25, 50, 100 metres, or the like. If 'yes' then in a subsequent step 350, the junction detection module 340 is configured to repeat step 348 for the number of features N stored in a feature array comprised in the database 310. If 'no' is the final outcome for either of steps 342, 346 or 348, then the next step is carried out in a subsequent module described below. However, if no existing features 314 are within the predetermined distance of the current location then, in a subsequent step 352, at least one of: the current location, heading, inclination in the preceding period and vehicle speed of the vehicle 300 are stored in the feature array (e.g. in the next line of the feature array).

The control system 302 further comprises a coast range module 356. In this module 356, the coast range of the vehicle 300 is calculated, from the current speed of the vehicle. In particular, the coast range module 356 determines the distance or range along the route 312 that the vehicle 300 would coast from its current speed to a predetermined target speed. The coast range is calculated individually for each feature 314 in the feature array and is a function of vehicle speed, average deceleration and the inclination for that feature that is stored in the feature array. In a first step 358, the coast range module 356 determines whether the vehicle is coasting (e.g. if at least one of: the acceleration pedal of the vehicle 300 is not active (or travel is less than a predetermined valve in the order of 5, 10, 15 %, or the like); the brake pedal of the vehicle is not active (or travel is less than a predetermined valve in the order of 5, 10, 15 %, or the like); the vehicle is in gear; and the speed is greater than a predetermined speed in the order of 20, 30, 40, 50 kph, or the like. It will be appreciated that depending on the type of vehicle 300 powertrain, some of these parameters that determine whether the vehicle 300 is coasting may or may not be relevant. If 'yes' the vehicle 300 is coasting, in a subsequent step 360, a deceleration rate is calculated (e.g. on a continual or constant basis) while the vehicle 300 is coasting. The calculated deceleration values are calculated and stored in a deceleration array (which may, for example, be comprised in the database 310). New deceleration values are added to this array every 2 seconds whilst the following conditions are satisfied: the accelerator position is less than the predetermined value; the brake pedal position is less than the predetermined value; and the vehicle 300 speed is greater than the predetermined value. In a subsequent step 362, the average deceleration rate is calculated and used in a subsequent step in either the coast range module 356 or another module of the control system 302. The subsequent step 364 in the coast range module 356 is configured to calculate the coast range for the feature 314, the coast range being a function of at least one of: vehicle speed 300; average deceleration; inclination; and the like. Alternatively, if 'no' the vehicle 300 is not coasting as determined by step 358, then the subsequent step 364 is also performed.

The control system 302 further comprises a predicted heading module 366 configured to calculate the predicted heading of the vehicle 300 in a step 368. This calculation is a function of at least one of: vehicle 300 speed; yaw rate; coast range; and the like. The predicted heading represents the heading from the current location to the predicted location of the vehicle 300 at the end of a coast if the coast were started at the current location and condition (e.g. speed, weight, or the like) of the vehicle 300.

The control system 302 further comprises a coast detection module 370 configured to determine whether the vehicle 300 should enter a coast by checking several conditions. These conditions are checked for each feature 314 in the feature array individually. In a first step 372, the module 370 determines if the distance from the current location to the i-th feature 314 stored in the feature array is less than the coast range determined by the coast range module 356. If 'yes' then in a subsequent step 374, the module 370 determines if the heading from the current location to the location of the i-th feature 314 (the location of the feature 314 being stored in the feature array) is equal to the predicted heading calculated by the predicted heading module 366 but within a predetermined tolerance (i.e. within ± of the order of 5, 10, 15 degrees, or the like of the predicted heading). If 'yes' then in a subsequent step 376, the module 370 determines if the heading at the i-th feature 314 stored in the feature array is equal to the predicted heading calculated by the predicted heading module 366 but within a predetermined tolerance (i.e. within ± of the order of 5, 10, 15 degrees, or the like of the predicted heading). If all of the steps 372, 374 and 376 result in a 'yes' then the vehicle 300 is considered ready to enter a coast mode (which may also be referred to as a "coasting condition" under which the passenger service vehicle 300 can coast without being under motive power to arrive at the feature location 314 at a velocity that is a target velocity 320 or higher, or within a target velocity range) and a subsequent step is carried out by another module of the control system 320 described below. However, if the answer to any of the steps 372, 374 or 376 is 'no' then the sub-functions for the coast range (via the coast range module 356), the predicted heading (via the predicted heading module 366) and the coast detection (via the coast detection module 370) are repeated in a step 378 for each subsequent feature 'i+1' 314 until i > N where N is the number of features 314 stored in the feature array.

The control system 302 further comprises a coast control module 380 which is set to active 382 if the vehicle 300 is considered ready to enter the coast mode defined if all the conditions specified by steps 372, 372 and 376 in the coast detection module 370 are satisfied. In the coast mode, the coast control module 380 triggers the indication 324 (e.g. in the form of a signal to the vehicle operator and/or the powertrain) for the vehicle 300 to coast (e.g. by ceasing providing additional torque to the driveline of the vehicle 300, or the like). The coast mode remains active or latched until any of the following conditions are true. These conditions include establishing 384 whether the accelerator position is greater than a predetermined position e.g. in the order of 5, 10, 15 %, or the like or whether the rate of change of the accelerator position exceeds the predetermined rate (e.g. in the order of 5, 10, 15 %/s, or the like) (i.e. the accelerator pedal is pushed down); or establishing 386 whether the speed is less than the predetermined speed. In this case, pushing the accelerator pedal down has the effect of cancelling the coasting condition irrespective of the impact on the vehicle speed. If any of these conditions become true then the coast control module 380 is set to inactive 388 and the indication 324 for the operator and/or powertrain is stopped. When one of these conditions becomes true the logic flow comes to an end 390 and is started again (e.g. when the vehicle moves again or is restarted). In an example, if the driver doesn't press the accelerator pedal enough the vehicle 300 will keep coasting until the speed drops lower than the target velocity. At this point, the logic flow can be restarted. In an example, the control system 302 may lock the coasting control to inactive for a determined or predetermined period of time, which may be in the order of seconds, or the like after a coast is cancelled due to the drivers pedal input so if the driver cancels the coast, the coasting control doesn't immediately kick in again.

It will be appreciated that the vehicle 300 may be used to provide a service for different routes, for example, to compensate for changes in passenger demand for the service.

It will be appreciated that, where appropriate, speed and velocity may be used interchangeably. However depending on its use, it will be appreciated that velocity may refer to a vector, and hence may or may not comprise information regarding the heading of the vehicle.

Furthermore, although examples of features 314 such as bus stops and junctions are given, it will be appreciated that the principles given above may be applied to other features 314 in which the vehicle 300 potentially has to slow down or stop, such as sharp corners.

Some described examples of control systems may allow a passenger service vehicle 300, or the like, to identify and learn "features locations" 314 in a route 312 (for example, passenger stops, junctions, or the like) and identify a point in advance of the feature location 314 where it is most efficient to begin coasting (e.g. by activating the coast mode) in order to arrive at the identified feature location at a pre-determined speed (e.g. at the target velocity 320 or higher, or within the target velocity range). In other words, the control system 302 may be configured to calculate when coasting can begin in advance of a bus stop or the like, so that the vehicle operator can coast and arrive at an acceptable speed (in one example the target velocity 320 may be 20 kph or higher but less than 40 kph, or the like), avoiding unnecessary heavy breaking and so maximise fuel efficiency. The location of the feature can be identified through an aggregation of different operating parameters over a number of trips on the route 312, such as speed, location, door open status, yaw rate, and the like. In some examples, the control system 302 has the ability to consider the direction of travel in the form of a "heading" of the vehicle 300 (e.g. in the event that a feature, such as a bus stop is on the opposite side of the road). It will be appreciated that the acceptable target velocity range may be different to the described example, for example, the target velocity may be: more than 5 kph; 10kph; 20 kph; 30 kph or the like and may be: less than 50 kph; 40 kph; 30 kph; 20 kph; 10 kph or the like. Any combination of these (or any other appropriate) examples of target velocities may be used to define a "target velocity range".

Method steps according to the invention can be performed by one or more programmable processors executing a computer program to perform functions of the disclosure by operating on input data and generating output. Method steps can also be performed by special purpose logic circuitry, e.g., an FPGA (field programmable gate array) or an ASIC (application-specific integrated circuit) or other customised circuitry. Processors suitable for the execution of a computer program include CPUs and microprocessors, and any one or more processors. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g. EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

Various methods, systems and/or apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

It will be well understood by persons of ordinary skill in the art that whilst some examples or embodiments may implement certain functionality by means of a computer program having computer-readable instructions that are executable to perform the method of the embodiments, the computer program functionality could be implemented in hardware (for example by means of a CPU or by one or more ASICs (application specific integrated circuits), FPGAs (field programmable gate arrays) or GPUs (graphic processing units)) or by a mix of hardware and software.

Accordingly, the method, apparatus and/or tool may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

## Claims

1. A control system (302) for a passenger service vehicle (300), the control system (302) comprising or configured to access or communicate with:
a database (310) comprising a plurality of feature locations (314) along a route (312) of the passenger service vehicle (300) that corresponds to a route along which passenger service vehicles (300) make repeated trips along the same route in order to provide a regular service for passengers and at least some of the feature locations (314) comprise a plurality of passenger stops;
a vehicle information system providing at least one operating parameter of the passenger service vehicle (300), such as velocity and/or location of the passenger service vehicle (300);
wherein the control system (302) is configured to determine, based at least partly on the at least one operating parameter of the vehicle (300), a coasting condition associated with the passenger service vehicle (300) under which the passenger service vehicle (300) can coast without being under motive power to arrive at the feature location (314) at a velocity that is a target velocity or higher, or within a target velocity range; and to provide an indication that the passenger service vehicle (300) should begin to coast based on the coasting condition,
**characterised in that**
the control system (302) is configured to determine which of the plurality of feature locations (314) correspond to the at least one passenger stop at least partly based on a feature location profile indicative of a passenger stop, wherein the feature location profile indicative of a passenger stop is based at least in part on at least one of: an output of a door open/close sensor indicating that a door of the passenger service vehicle (300) has been opened and closed, an output of a weight sensor and/or passenger ticketing information.

2. The control system (302) of claim 1, wherein the control system (302) is configured to determine how far the vehicle (300) will coast at least partly based on one or more learned parameters such as past coasting performance of the passenger service vehicle (300), and optionally wherein the learned parameters are or comprise learned parameters for, associated with or near the current location.

3. The control system (302) of claim 1 or 2 wherein the control system (302) is configured to access or communicate with the database (310) to obtain information regarding the plurality of feature locations, and optionally wherein the information regarding the plurality of feature locations is learned from making at least one trip along the route (312).

4. The control system (302) of claim 3, wherein the information comprises established control rules for predicting behaviour of the passenger service vehicle (300) along the route (312) based on the information regarding the plurality of feature locations (314) and the location and/or velocity of the passenger service vehicle (300), and optionally wherein the control system (302) is configured to obtain data from a data input (308) indicative at least one condition of the passenger service vehicle (300) and use the data to update the information.

5. The control system (302) of any one of claims 1 to 4, wherein the control system (302) is configured to predict whether the passenger service vehicle (300) will arrive at the feature location (314) at the target velocity or higher, or within the target velocity range based on a current velocity at a current location of the passenger service vehicle (300).

6. The control system (302) of any one of claims 1 to 5, wherein the plurality of feature locations (314) comprise a junction, the control system (302) being configured to identify the junction at least partly based on a feature location profile indicative of a junction, and optionally wherein the control system (302) is configured to identify a start point of the junction via a speed or speed limit of the vehicle (300), and further configured to monitor at least one of: yaw rate; speed; and distance from start point.

7. The control system (302) of any one of claims 1 to 6, wherein the control system (302) is configured to calculate a coast range of the passenger service vehicle (300) based on at least one of: a vehicle speed; deceleration rate; average deceleration rate; and inclination of the vehicle (300).

8. The control system (302) of any one of claims 1 to 7, wherein the control system (302) is configured to predict a heading of the vehicle (300) based on at least one of: a vehicle speed; yaw rate; and coast range of the vehicle (300).

9. The control system (302) of any one of claims 1 to 8, wherein the control system (302) is configured to determine whether the vehicle (300) can activate the coasting condition based on at least one operating parameter of the vehicle (300) being within a predetermined range.

10. The control system (302) of any one of claims 1 to 9, wherein the control system (302) is configured to set the coasting condition to active if the vehicle (300) can coast without being under motive power to arrive at the feature location (314) at a velocity that is a target velocity or higher, or within a target velocity range, and wherein the control system (302) is configured to set the coasting condition to inactive if at least one operating parameter of the vehicle (300) changes to be within a predetermined range.

11. The control system (302) of any one of claims 1 to 10, wherein the control system (302) is configured to control energy consumption by the passenger service vehicle (300) upon providing the indication that the passenger service vehicle (300) should begin to coast.

12. The control system (302) of any one of claims 1 to 11, comprising an operator indicator configured to prompt an operator of the passenger service vehicle (300) to control energy consumption by the passenger service vehicle (300) upon providing the indication that the passenger service vehicle (300) should begin to coast.

13. The control system (302) of any one of claims 1 to 12, wherein the control system (302) comprises or is configured to access a location based system configured to determine the location of the passenger service vehicle (300).

14. A method of operating a passenger service vehicle (300), comprising:
accessing or communicating with:
a database (310) comprising a plurality of feature locations (314) along a route (312) of the passenger service vehicle (300) that corresponds to a route along which passenger service vehicles (300) make repeated trips along the same route in order to provide a regular service for passengers and at least some of the feature locations (314) comprise a plurality of passenger stops; and
a vehicle information system providing at least one operating parameter of the passenger service vehicle (300), such as velocity and/or location of the passenger service vehicle (300);
determining, based at least partly on the at least one operating parameter of the vehicle (300), a coasting condition associated with the passenger service vehicle (300) under which the passenger service vehicle (300) can coast without being under motive power to arrive at the feature location (314) at a velocity that is a target velocity or higher, or within a target velocity range;
**characterised by**
determining which of the plurality of feature locations (314) correspond to the at least one passenger stop at least partly based on a feature location profile indicative of a passenger stop, wherein the feature location profile indicative of a passenger stop is based at least in part on at least one of: an output of a door open/close sensor indicating that a door of the passenger service vehicle (300) has been opened and closed, an output of a weight sensor and/or passenger ticketing information and
providing an indication that the passenger service vehicle (300) should begin to coast based on the coasting condition.

15. A computer program product configured such that, when executed on at least one processor (306), causes the at least one processor (306) to implement the method of claim 14.

## Patentansprüche

1. Steuersystem (302) für ein Personenbeförderungsfahrzeug (300), wobei das Steuersystem (302) Folgendes umfasst oder zum Zugreifen auf oder Kommunizieren mit Folgende(n) konfiguriert ist:
eine(r) Datenbank (310), die eine Vielzahl von Merkmalsorten (314) entlang einer Route (312) des Personenservicefahrzeugs (300) umfasst, die einer Route entspricht, entlang der Personenbeförderungsfahrzeuge (300) wiederholte Fahrten entlang derselben Route durchführen, um einen regelmäßigen Service für Fahrgäste bereitzustellen, und mindestens einige der Merkmalsorte (314) eine Vielzahl von Haltestellen umfassen,
ein(em) Fahrzeuginformationssystem, das mindestens einen Betriebsparameter des Personenbeförderungsfahrzeugs (300), wie beispielsweise Geschwindigkeit und/oder Ort des Personenbeförderungsfahrzeugs (300), bereitstellt;
wobei das Steuersystem (302) konfiguriert ist zum Bestimmen, mindestens teilweise auf der Basis des mindestens einen Betriebsparameters des Fahrzeugs (300), einer mit dem Personenbeförderungsfahrzeug (300) assoziierten Leerlaufbedingung, in der das Personenbeförderungsfahrzeug (300), ohne einer Antriebskraft ausgesetzt zu werden, leerlaufen kann, um an dem Merkmalsort (314) mit einer Geschwindigkeit anzukommen, die eine Zielgeschwindigkeit oder höher ist oder innerhalb eines Zielgeschwindigkeitsbereichs liegt, und zum Bereitstellen einer Anzeige, dass das Personenbeförderungsfahrzeug (300) auf der Basis der Leerlaufbedingung mit dem Leerlaufen beginnen sollte,
**dadurch gekennzeichnet, dass** das Steuersystem (302) konfiguriert ist zum Bestimmen, welcher aus der Vielzahl von Merkmalsorten (314) der mindestens einen Haltestelle entspricht, mindestens teilweise auf der Basis eines Merkmalsortprofils, das eine Haltestelle anzeigt, wobei das eine Haltestelle anzeigende Merkmalsortprofil mindestens teilweise auf mindestens einem der Folgenden basiert: einem Ausgang eines Türöffnungs-/-schließsensors, der anzeigt, dass eine Tür des Personenbeförderungsfahrzeugs (300) geöffnet und geschlossen wurde, einem Ausgang eines Gewichtssensors und/oder Fahrscheininformationen.

2. Steuersystem (302) nach Anspruch 1, wobei das Steuersystem (302) konfiguriert ist zum Bestimmen, wie weit das Fahrzeug (300) leerlaufen wird, mindestens teilweise auf der Basis eines oder mehrerer gelernter Parameter, wie z. B. der vergangenen Leerlaufleistung des Personenbeförderungsfahrzeugs (300), und wobei die gelernten Parameter optional gelernte Parameter für den, assoziiert mit dem oder in der Nähe des aktuellen Ort(s) sind oder umfassen.

3. Steuersystem (302) nach Anspruch 1 oder 2, wobei das Steuersystem (302) zum Zugreifen auf die oder Kommunizieren mit der Datenbank (310) konfiguriert ist, um Informationen bezüglich der Vielzahl von Merkmalsorten zu erhalten, und wobei optional die Informationen bezüglich der Vielzahl von Merkmalsorten aus der Durchführung von mindestens einer Fahrt entlang der Route (312) gelernt werden.

4. Steuersystem (302) nach Anspruch 3, wobei die Informationen etablierte Steuerregeln zur Vorhersage des Verhaltens des Personenbeförderungsfahrzeugs (300) entlang der Route (312) auf der Basis der Informationen bezüglich der Vielzahl von Merkmalsorten (314) und des Orts und/oder der Geschwindigkeit des Personenbeförderungsfahrzeugs (300) umfassen, und wobei optional das Steuersystem (302) zum Erhalten von Daten von einem Dateneingang (308) konfiguriert ist, die mindestens eine Bedingung des Personenbeförderungsfahrzeugs (300) anzeigen, und zum Verwenden der Daten zur Aktualisierung der Informationen.

5. Steuersystem (302) nach einem der Ansprüche 1 bis 4, wobei das Steuersystem (302) zum Vorhersagen, ob das Personenbeförderungsfahrzeug (300) mit der Zielgeschwindigkeit oder höher oder innerhalb des Zielgeschwindigkeitsbereichs am Merkmalsort (314) ankommen wird, auf der Basis einer aktuellen Geschwindigkeit an einem aktuellen Ort des Personenbeförderungsfahrzeugs (300) konfiguriert ist.

6. Steuersystem (302) nach einem der Ansprüche 1 bis 5, wobei die Vielzahl von Merkmalsorten (314) eine Kreuzung umfasst, wobei das Steuersystem (302) zum Identifizieren der Kreuzung mindestens teilweise auf der Basis eines eine Kreuzung anzeigenden Merkmalsortprofils konfiguriert ist, und wobei das Steuersystem (302) optional zum Identifizieren eines Startpunkts der Kreuzung über eine Geschwindigkeit oder eine Geschwindigkeitsbegrenzung des Fahrzeugs (300) konfiguriert ist und ferner zum Überwachen von mindestens einem von Gierrate; Geschwindigkeit; und Entfernung vom Startpunkt konfiguriert ist.

7. Steuersystem (302) nach einem der Ansprüche 1 bis 6, wobei das Steuersystem (302) zum Berechnen einer Leerlaufreichweite des Personenbeförderungsfahrzeugs (300) auf der Basis von mindestens einem von einer Fahrzeuggeschwindigkeit; einer Verlangsamungsrate; einer durchschnittlichen Verlangsamungsrate; und einer Neigung des Fahrzeugs (300) konfiguriert ist.

8. Steuersystem (302) nach einem der Ansprüche 1 bis 7, wobei das Steuersystem (302) zum Vorhersagen eines Kurses des Fahrzeugs (300) auf der Basis von mindestens einem von einer Fahrzeuggeschwindigkeit; einer Gierrate und einer Leerlaufreichweite des Fahrzeugs (300) konfiguriert ist.

9. Steuersystem (302) nach einem der Ansprüche 1 bis 8, wobei das Steuersystem (302) zum Feststellen, ob das Fahrzeug (300) die Leerlaufbedingung aktivieren kann, auf der Basis davon konfiguriert ist, dass mindestens ein Betriebsparameter des Fahrzeugs (300) innerhalb eines vorbestimmten Bereichs liegt.

10. Steuersystem (302) nach einem der Ansprüche 1 bis 9, wobei das Steuersystem (302) zum Setzen der Leerlaufbedingung auf aktiv konfiguriert ist, wenn das Fahrzeug (300) leerlaufen kann, ohne einer Antriebskraft ausgesetzt zu werden, um an dem Merkmalsort (314) mit einer Geschwindigkeit anzukommen, die eine Zielgeschwindigkeit oder höher ist oder innerhalb eines Zielgeschwindigkeitsbereichs liegt, und wobei das Steuersystem (302) zum Setzen der Leerlaufbedingung auf inaktiv konfiguriert ist, wenn sich mindestens ein Betriebsparameter des Fahrzeugs (300) so ändert, dass er innerhalb eines vorgegebenen Bereichs liegt.

11. Steuersystem (302) nach einem der Ansprüche 1 bis 10, wobei das Steuersystem (302) zum Steuern des Energieverbrauchs des Personenbeförderungsfahrzeugs (300) beim Bereitstellen des Hinweises konfiguriert ist, dass das Personenbeförderungsfahrzeug (300) mit dem Leerlaufen beginnen sollte.

12. Steuersystem (302) nach einem der Ansprüche 1 bis 11, das eine Bedieneranzeige umfasst, die zum Auffordern eines Bedieners des Personenbeförderungsfahrzeugs (300) konfiguriert ist, den Energieverbrauch des Personenbeförderungsfahrzeugs (300) zu steuern, beim Bereitstellen der Anzeige, dass das Personenbeförderungsfahrzeug (300) mit dem Leerlaufen beginnen sollte.

13. Steuersystem (302) nach einem der Ansprüche 1 bis 12, wobei das Steuersystem (302) ein ortsbezogenes System, das konfiguriert ist, um den Ort des Personenbeförderungsfahrzeugs (300) zu bestimmen, umfasst oder zum Zugreifen darauf konfiguriert ist.

14. Verfahren zum Betreiben eines Personenbeförderungsfahrzeugs (300), das Folgendes umfasst:
Zugreifen auf oder Kommunizieren mit:
eine(r) Datenbank (310), die eine Vielzahl von Merkmalsorten (314) entlang einer Route (312) des Personenbeförderungsfahrzeugs (300) umfasst, die einer Route entspricht, entlang der Personenbeförderungsfahrzeuge (300) wiederholte Fahrten entlang derselben Route durchführen, um einen regelmäßigen Service für Fahrgäste bereitzustellen, und mindestens einige der Merkmalsorte (314) eine Vielzahl von Haltestellen umfassen,
ein(em) Fahrzeuginformationssystem, das mindestens einen Betriebsparameter des Personenbeförderungsfahrzeugs (300), wie beispielsweise Geschwindigkeit und/oder Ort des Personenbeförderungsfahrzeugs (300), bereitstellt;
Bestimmen, mindestens teilweise auf der Basis des mindestens einen Betriebsparameters des Fahrzeugs (300), einer mit dem Personenbeförderungsfahrzeug (300) assoziierten Leerlaufbedingung, unter welche das Personenbeförderungsfahrzeug (300) leerlaufen kann, ohne einer Antriebskraft ausgesetzt zu werden, um an dem Merkmalsort (314) mit einer Geschwindigkeit anzukommen, die eine Zielgeschwindigkeit oder höher ist oder innerhalb eines Zielgeschwindigkeitsbereichs liegt,
**gekennzeichnet durch**
Bestimmen, welcher aus der Vielzahl von Merkmalsorten (314) der mindestens einen Haltestelle entspricht, mindestens teilweise auf der Basis eines Merkmalsortprofils, das eine Haltestelle anzeigt, wobei das eine Haltestelle anzeigende Merkmalsortprofil mindestens teilweise auf mindestens einem der Folgenden basiert: einem Ausgang eines Türöffnungs-/-schließsensors, der anzeigt, dass eine Tür des Personenbeförderungsfahrzeugs (300) geöffnet und geschlossen wurde, einem Ausgang eines Gewichtssensors und/oder Fahrscheininformationen basiert, und
Bereitstellen einer Anzeige, dass das Personenbeförderungsfahrzeug (300) mit dem Leerlaufen beginnen sollte, auf der Basis der Leerlaufbedingung.

15. Computerprogrammprodukt, das so konfiguriert ist, dass es bei Ausführung auf mindestens einem Prozessor (306) bewirkt, dass der mindestens eine Prozessor (306) das Verfahren nach Anspruch 14 durchführt.

## Revendications

1. Système de commande (302) pour un véhicule de service aux passagers (300), le système de commande (302) comprenant ou étant configuré pour accéder à ou communiquer avec :
une base de données (310) comprenant une pluralité d'emplacements caractéristiques (314) le long d'un itinéraire (312) du véhicule de service aux passagers (300) qui correspond à un itinéraire le long duquel des véhicules de service aux passagers (300) effectuent des trajets répétés le long du même itinéraire afin de fournir un service régulier aux passagers, et au moins certains des emplacements caractéristiques (314) comprennent une pluralité d'arrêts pour passagers ;
un système d'informations du véhicule fournissant au moins un paramètre de fonctionnement du véhicule de service aux passagers (300), tel que la vitesse et/ou l'emplacement du véhicule de service aux passagers (300) ;
ledit système de commande (302) étant configuré pour déterminer, sur la base, au moins en partie, de l'au moins un paramètre de fonctionnement du véhicule (300), une condition de conduite en roue libre associée au véhicule de service aux passagers (300) dans laquelle le véhicule de service aux passagers (300) peut rouler en roue libre sans être sous l'effet d'une force motrice pour arriver à l'emplacement caractéristique (314) à une vitesse égale ou supérieure à une vitesse cible, ou située dans une plage de vitesse cible ; et pour fournir une indication que le véhicule de service aux passagers (300) devrait commencer à rouler en roue libre sur la base de la condition de conduite en roue libre,
**caractérisé en ce que** le système de commande (302) est configuré pour déterminer ceux de la pluralité d'emplacements caractéristiques (314) qui correspondent audit au moins un arrêt pour passagers, sur la base, au moins en partie, d'un profil d'emplacement caractéristique indicatif d'un arrêt pour passagers, ledit profil d'emplacement caractéristique indicatif d'un arrêt pour passagers reposant au moins en partie sur au moins l'un des éléments suivants : une sortie d'un capteur d'ouverture/fermeture de porte indiquant qu'une porte du véhicule de service aux passagers (300) a été ouverte et fermée, une sortie d'un capteur de poids et/ou des informations relatives aux tickets des passagers.

2. Système de commande (302) selon la revendication 1, ledit système de commande (302) étant configuré pour déterminer jusqu'où le véhicule (300) se déplacera en roue libre sur la base, au moins en partie, d'un ou plusieurs paramètres appris, tels que les performances en roue libre antérieures du véhicule de service aux passagers (300), et facultativement dans lequel lesdits paramètres appris sont ou comprennent des paramètres appris pour l'emplacement actuel, associés à celui-ci ou à proximité de celui-ci.

3. Système de commande (302) selon la revendication 1 ou 2, ledit système de commande (302) étant configuré pour accéder à ou communiquer avec la base de données (310) pour obtenir des informations concernant la pluralité d'emplacements caractéristiques, lesdites informations concernant la pluralité d'emplacements caractéristiques étant facultativement apprises par la réalisation d'au moins un trajet effectué le long de l'itinéraire (312).

4. Système de commande (302) selon la revendication 3, dans lequel les informations comprennent des règles de commande établies pour prédire le comportement du véhicule de service aux passagers (300) le long de l'itinéraire (312) sur la base des informations concernant la pluralité d'emplacements caractéristiques (314) et de l'emplacement et/ou de la vitesse du véhicule de service aux passagers (300), ledit système de commande (302) étant facultativement configuré pour obtenir des données à partir d'une entrée de données (308) indicative d'au moins une condition relative au véhicule de service aux passagers (300) et pour utiliser les données pour mettre à jour les informations.

5. Système de commande (302) selon l'une quelconque des revendications 1 à 4, ledit système de commande (302) étant configuré pour prédire si le véhicule de service aux passagers (300) arrivera à l'emplacement caractéristique (314) à la vitesse cible ou plus, ou dans la plage de vitesse cible, sur la base d'une vitesse actuelle à un emplacement actuel du véhicule de service aux passagers (300).

6. Système de commande (302) selon l'une quelconque des revendications 1 à 5, dans lequel la pluralité d'emplacements caractéristiques (314) comprend un carrefour, le système de commande (302) étant configuré pour identifier le carrefour sur la base, au moins en partie, d'un profil d'emplacement caractéristique indicatif d'un carrefour, et ledit système de commande (302) étant facultativement configuré pour identifier un point de départ du carrefour par une vitesse ou une limite de vitesse du véhicule (300), et étant en outre configuré pour contrôler au moins l'un parmi : taux de lacet, vitesse, et distance par rapport au point de départ.

7. Système de commande (302) selon l'une quelconque des revendications 1 à 6, ledit système de commande (302) étant configuré pour calculer un intervalle en roue libre du véhicule de service aux passagers (300) sur la base d'au moins l'un parmi : vitesse du véhicule, taux de décélération, taux de décélération moyen, et inclinaison du véhicule (300).

8. Système de commande (302) selon l'une quelconque des revendications 1 à 7, ledit système de commande (302) étant configuré pour prédire un cap du véhicule (300) sur la base d'au moins l'un parmi : vitesse du véhicule, taux de lacet, et portée en roue libre du véhicule (300).

9. Système de commande (302) selon l'une quelconque des revendications 1 à 8, ledit système de commande (302) étant configuré pour déterminer si le véhicule (300) peut activer la condition de roue libre sur la base du fait qu'au moins un paramètre de fonctionnement du véhicule (300) se situe dans une plage prédéterminée.

10. Système de commande (302) selon l'une quelconque des revendications 1 à 9, ledit système de commande (302) étant configuré pour définir la condition de roue libre comme active si le véhicule (300) peut rouler en roue libre sans être sous force motrice pour arriver à l'emplacement caractéristique (314) à une vitesse égale ou supérieure à une vitesse cible, ou située dans une plage de vitesses cible, et ledit système de commande (302) étant configuré pour définir la condition de roue libre comme inactive si au moins un paramètre de fonctionnement du véhicule (300) change pour se situer dans une plage prédéterminée.

11. Système de commande (302) selon l'une quelconque des revendications 1 à 10, ledit système de commande (302) étant configuré pour commander la consommation d'énergie du véhicule de service aux passagers (300) lors de la fourniture de l'indication que le véhicule de service aux passagers (300) devrait commencer à rouler en roue libre.

12. Système de commande (302) selon l'une quelconque des revendications 1 à 11, comprenant un indicateur destiné à l'opérateur configuré pour inviter un opérateur du véhicule de service aux passagers (300) à commander la consommation d'énergie du véhicule de service aux passagers (300) lors de la fourniture de l'indication que le véhicule de service aux passagers (300) devrait commencer à rouler en roue libre.

13. Système de commande (302) selon l'une quelconque des revendications 1 à 12, ledit système de commande (302) comprenant ou étant configuré pour accéder à un système reposant sur la localisation configuré pour déterminer l'emplacement du véhicule de service aux passagers (300).

14. Procédé d'exploitation d'un véhicule de service aux passagers (300), comprenant :
l'accès à ou la communication avec :
une base de données (310) comprenant une pluralité d'emplacements caractéristiques (314) le long d'un itinéraire (312) du véhicule de service aux passagers (300) qui correspond à un itinéraire le long duquel des véhicules de service aux passagers (300) effectuent des trajets répétés le long du même itinéraire afin de fournir un service régulier aux passagers, et au moins certains des emplacements caractéristiques (314) comprennent une pluralité d'arrêts pour passagers ; et
un système d'informations du véhicule fournissant au moins un paramètre de fonctionnement du véhicule de service aux passagers (300), tel que la vitesse et/ou l'emplacement du véhicule de service aux passagers (300) ;
la détermination, sur la base, au moins en partie, de l'au moins un paramètre de fonctionnement du véhicule (300), d'une condition de conduite en roue libre associée au véhicule de service aux passagers (300) dans laquelle le véhicule de service aux passagers (300) peut rouler en roue libre sans être sous force motrice pour arriver à l'emplacement caractéristique (314) à une vitesse égale ou supérieure à une vitesse cible, ou située dans une plage de vitesses cible ; et
**caractérisé par**
la détermination de ceux de la pluralité d'emplacements caractéristiques (314) qui correspondent audit au moins un arrêt pour passagers, sur la base, au moins en partie, d'un profil d'emplacement caractéristique indicatif d'un arrêt pour passagers, le profil d'emplacement caractéristique indicatif d'un arrêt pour passagers reposant au moins en partie sur au moins l'un parmi : une sortie d'un capteur d'ouverture/fermeture de porte indiquant qu'une porte du véhicule de service aux passagers (300) a été ouverte et fermée, une sortie d'un capteur de poids et/ou des informations relatives aux tickets des passagers, et
la fourniture d'une indication que le véhicule de service aux passagers (300) devrait commencer à rouler en roue libre sur la base de la condition de roue libre.

15. Produit-programme informatique configuré de telle manière que, lorsqu'il est exécuté sur au moins un processeur (306), il amène ledit au moins un processeur (306) à mettre en oeuvre le procédé selon la revendication 14.
